Europäisches Patentamt

European Patent Office

Office européen des brevets

(19)

(11) Publication number: 0 346 007

A1

## (12) EUROPEAN PATENT APPLICATION

(21) Application number: 89305537.6

(22) Date of filing: 01.06.89

(51) Int. Cl.⁴: **C10G 45/04 , B01J 29/02**

(30) Priority: 09.06.88 GB 8813695
20.04.89 GB 8908961

(43) Date of publication of application:
13.12.89 Bulletin 89/50

(84) Designated Contracting States:
**BE DE FR GB IT NL**

(71) Applicant: **The British Petroleum Company p.l.c.**
**Britannic House Moor Lane**
**London EC2Y 9BU(GB)**

(72) Inventor: **Atkins, Martin Phillip The British Petroleum Co.**
**Chertsey Road Sunbury-on-Thames**
**Middlesex, TW16 7LN(GB)**
Inventor: **Diddams, Paul Arthur The British Petroleum Co.plc**
**Chertsey Road Sunbury-on-Thames**
**Middlesex, TW16 7LN(GB)**

(74) Representative: **Scott, Susan Margaret et al**
**BP INTERNATIONAL LIMITED Patents & Agreements Division Chertsey Road Sunbury-on-Thames Middlesex TW16 7LN(GB)**

(54) Process for upgrading a light cycle oil.

(57) A process for up-grading a light cycle oil which process comprises contacting the light cycle oil and hydrogen at elevated temperature and pressure with a catalyst comprising a layered or pillared clay, loaded with one or more hydrogenating metals.

EP 0 346 007 A1

## PROCESS FOR UPGRADING A LIGHT CYCLE OIL

The present invention relates in general to the up-grading of light cycle oils (LCO) and in particular to improving the cetane index of light cycle oils by catalytic hydrotreatment thereof.

A light cycle oil is a fraction obtained from the catalytic cracking of heavier hydrocarbon functions, in the range from light gas oils to reduced crude oils. The characteristics of LCOs depend mainly on the nature of the feedstock from which they are derived and upon the severity of the cracking operation. LCOs are generally used as blending components in the production of diesel fuels and heating oils. It is with their use as diesel fuels that this specification is concerned.

An important property of diesel fuels is their ignition quality. For the purpose of defining ignition quality, the cetane number scale has been adopted, cetane and alpha-methyl napthalene being the high and low standards respectively. The ignition quality of a fuel is expressed in terms of cetane number as the percentage by volume of cetane in a blend of cetane and alpha-methyl napthalene having the same ignition quality as the sample fuel when tested in the same engine, under the same conditions. Two methods of test (IP41A and B) have been standardised by the Institute of Petroleum for the determination of cetane number and the ASTM method D613-62T is accepted as an alternative to either of these methods. In view of their high cost and the difficulty in obtaining the primary reference fuels, secondary reference fuels calibrated in terms of cetane number are used for all engine testing.

It is known that the cetane index of LCOs can be increased, typically from about 27 to about 32, by hydrotreating the LCO in the presence of catalysts generally containing hydrogenating metals of the iron group (i.e. iron, cobalt and nickel) and/or of Group VIB (i.e. chromium, molybdenum and tungsten) supported on an inorganic oxide support (e.g. alumina). Known hydrotreating catalysts also perform the important function of reducing sulphur levels in the feedstock. However, it has not been found possible to increase the cetane index substantially beyond 32 using known hydrogenating catalysts. In general diesel fuels having an acceptable cetane number are commercially produced by back-blending LCOs with fractions having a higher cetane index, for example with a Straight Run Gasoline.

Processes for the hydroconversion and up-grading of heavy crudes and heavy petroleum fractions using clay catalysts are known from, for example, GB-A-2167430, GB-A-2182919 and US-A-4,579,832.

GB-A-2167430 discloses a process for hydroconverting a heavy crude feedstock containing at least 200 ppm metals, having less than 20° API gravity and more than 8% Conradison Carbon, which comprises contacting said feedstock in a hydroconversion reaction zone with hydrogen in the presence of a natural inorganic material as a catalyst, said inorganic material containing elements as set forth in the representative formula (I) below:

$$(Si)_a(Al)_b(Fe)_c(Mg)_d(Ti)_e(P)_f(Mn)_g(Ca)_h(Ni)_i(H_2O)_j(CO_3)_k \qquad (I)$$

where

the subscripts a, b, c, d, e, f, g, h, i, j and k each represent the molar proportion of the element in the formula (I) for which it is subscript, the molar proportion for each element being calculated as follows:

Si as $SiO_2$,
Al as $Al_2O_3$,
Fe as $Fe_2O_3$,
Mg as $MgO$,
Ti as $TiO_2$,
P as $P_2O_5$,
Mn as $MnO$,
Ca as $CaO$, and
Ni as $NiO$.

and where

(j + k) is greater than or equal to 0.20
(c + g + i) is greater than or equal to 0.03 and (c + i) is greater than 0,
(a + b + d + e + f + h) is greater than or equal to 0.05, and
(a + b + d + e) is greater than 0.

GB-A-2182919 discloses a clay of laminated structure having between the layers bridges of aluminium oxide and/or zirconium oxide, wherein said clay contains at least one oxide of a metal or the lanthanide group and its use as a catalyst in the treatment of refining residues.

US-A-4,579,832 discloses a hydroprocessing catalyst possessing at least one activity of hydrocracking and hydrogenation, said catalyst comprising:
a cross-linked smectite framework material prepared through interaction of the polyanionic smectite layers with oxygen-containing oligomeric cations, selected from the group of oligomeric hydroxy-metal cations and oxo-metal cations; and incorporated interlamellar components consisting of preselected combinations of catalytically active transition metal derivatives selected from the group consisting of Mo, Cr, Ni, Co, W and other transition metals, said transition metals being present in the form of metal derivatives selected from the group consisting of oxygen-containing oligomers and oligomeric cations, and cations selected from the group consisting of mononuclear cations and binuclear cations.

None of the aforesaid patent disclosures specifically mention the up-grading of LCOs.

We have now surprisingly found that LCOs can be up-graded using layered or pillared clays loaded with a metal or metals having hydrogenating activity.

Accordingly the present invention provides a process for up-grading a Light Cycle Oil (LCO) which process comprises contacting the LCO and hydrogen at elevated temperature and pressure with a catalyst comprising a layered or pillared clay, loaded with one or more hydrogenating metals.

The process of the invention can lead to up-graded LCOs having cetane indices substantially greater than those observed in prior art hydrotreatment processes, for example cetane indices of 32 or higher, and sulphur contents comparable or better than those obtained using prior art catalysts. Moreover, and this is important commercially, substantial decreases in the density of the up-graded LCO have been observed.

Any LCO feedstock may be employed. A typical LCO feedstock may be characterised as follows:

Table 1

| Density at 15°C | = | 0.9325 |
|---|---|---|
| Total sulphur content | = | 2.21%(wt) |
| Calculated cetane index | = | 27 |
| Boiling Range: | | |
| Initial boiling point | = | 198°C |
| Final boiling point | = | 359°C |
| 50% boiling point | = | 272°C |

However, as hereinbefore mentioned, other LCOs may have different characteristics depending upon their origin and cracking severity.

Hydrogen from any suitable source may be used. Commercially available hydrogen may be used without further purification. Hydrogen in the form of refinery streams may require further purification to remove deleterious impurities, depending upon its origin.

Where the clay used is a layered clay, this is preferably of the bentonite or montmorillonite type. It may contain metal ions, or these may be exchanged with hydrogen ions as described in EP-A-31687. If metal ions are present, these may be the ions which occur naturally in a naturally-occurring clay, or may be exchanged with other ions, as described in EP-A-31252. Preferably a layered clay used in the process of the invention contains hydrogen ions.

Preferably the process of the invention uses a pillared clay. Pillared clays, also sometimes referred to as crosslinked layered clays, are well-known in the art. Suitable pillared clays are described in, for example, US Patents Nos. 4176090, 4216188, 4248739, 4271043, 4510257 and 4515901, the disclosures of which are incorporated by reference herein. The pillared clays suitable for use include alumina pillared clays, zirconia pillared clays, silica pillared clays and metal oxide pillared clays.

An acidic form of a pillared clay may be used in the process of the invention, and may be obtained by cation-exchanging the clay with suitable cations, for example proton, aluminium, ammonium or chromium, preferably proton. Techniques for cation-exchanging pillared clays and for separating the cation-exchanged clay from the exchange medium are well-known in the art and require no further elaboration.

The clay, especially pillared clay, is loaded with one or more hydrogenating metals. Suitable hydrogenating metals are metals of the iron group, for example iron, cobalt or nickel, and metals of Group VIB of the Periodic Table of the Elements, for example chromium, molybdenum or tungsten. A preferred metal is molybdenum. It may be desirable to use a combination of an iron group metal and a Group VIB metal, for example cobalt and molybdenum.

The clay may be loaded with the hydrogenating metal by any of the means known in the art for the preparation of supported catalysts, for example by ion-exchange, impregnation, precipitation or coprecipitation. A preferred method is by impregnation, which may suitably be accomplished by the incipient wetness technique or the excess solution technique using aqueous or organic solvents or mixtures thereof. Where

3

the metal is molybdenum, suitable Mo compounds for use in preparing the catalyst include molybdates, for example ammonium heptamolybdate, and heteropolyacids such as phosphatomolybdic acid and sililcatomolybdic acid or salts thereof. Where the metal is cobalt suitable cobalt compounds include salts of mineral or organic acids, for example cobalt (II) carbonate, chloride, nitrate or acetate, or complexes such as cobalt III acetylacetonate.

The catalyst may suitably contain up to 30% wt, preferably from 5 to 20% wt of the hydrogenating metal or metals.

Before use in the process of the invention it is preferred to pre-sulphide the catalyst. This may suitably be accomplished by contacting the catalyst at elevated temperature and pressure with a sulphur-containing feedstock. As the sulphur-containing feedstock there may be used an LCO, which is preferably the LCO used as feedstock in the process of the invention, or carbon disulphide which may suitably be present in a suitable high boiling solvent, for example a gas oil. It is preferred to pre-sulphide the catalyst using carbon disulphide. The elevated temperature may suitably be in the range from 150 to 400 $^\circ$C, preferably from 175 to 300 $^\circ$C and the elevated pressure may suitably be in the range from 5 to 30 bar, preferably from 10 to 20 bar. Pre-sulphiding may be effected at a single temperature within the aforesaid range or at more than one temperature in successive steps.

Contact of the LCO with hydrogen is preferably effected over the catalyst in the form of a fixed bed. The process may be operated batchwise or continuously, preferably continuously.

The LCO may be contacted with hydrogen at an elevated temperature in the range from 200 to 430 $^\circ$C, preferably from 300 to 380 $^\circ$C and an elevated pressure in the range from 10 to 150, preferably from 50 to 100, atmospheres.

The invention will now be further illustrated by reference to the following examples.

## A. Preparation of Clays

### (i) Preparation of H-Montmorillonite

Montmorillonite, purchased from English China Clays (150g) was dispersed in an aqueous solution of HCl (2.5 l, 0.5M) at ambient temperature and stirred for 6 hours. The montmorillonite was allowed to settle and the supernatent liquid decanted off, replaced with fresh aqueous HCl (0.5M) and stirred for a further 6 hours. The montmorillonite was allowed to settle again, the supernatent liquid decanted off and replaced with fresh aqueous HCL (0.1M) and stirred for a further 6 hours. The supernatent liquid was again decanted off and the montmorillonite repeatedly washed with distilled water to remove extraneous ions then dried at 60 $^\circ$C.

### (ii) Preparation of Alumina Pillared Montmorillonite

Aluminium chlorhydrol (700g, 50% wt aqueous) was added to distilled water (4.0 l) and stirred for 1 hour at 80 $^\circ$C. Montmorillonite (250g) was added and the mixture stirred for 4 hours whilst cooling to room temperature. The aluminium chlorhydrol exchanged montmorillonite was separated by decanting and repeatedly washing with distilled water to remove extraneous ions. The pillared montmorillonite precursor was dried at 60 $^\circ$C then calcined at 450 $^\circ$C for 1 hour, cooling in an ammonia atmosphere.

### (iii) Preparation of Zirconia Pillared Montmorillonite

Zirconyl chloride (250g) was dissolved in distiled water (4.0 l) and stirred at 75 $^\circ$C for 2 hours. Montmorillonite (100g) was added and the mixture stirred for 6 hours whilst cooling to room temperature. The zirconyl chloride exchanged montmorillonite was separated by decanting and repeatedly washed with distilled water until free from extraneous ions. The zirconia pillared montmorillonite precursor was dried at 60 $^\circ$C then calcined at 450 $^\circ$C, cooling in an ammonia atmosphere.

### B. Impregnation of Clay with Metal(s) (method (i))

(i) Ammonium paramolybdate, $(NH_4)_6Mo_7O_{24}.4H_2O$ (22.08 g) was dissolved in distilled water (100 ml) at ambient temperature to form Solution A,

(ii) A clay as prepared in (A) was dispersed in 200 ml distilled water to form Suspension B,

(iii) Solution A was added to Suspension B and the mixture stirred for 6 hours,

(iv) the Mo impregnated clay was recovered and dried on a rotary evaporator (Mo clay),

(v) metal nitrate, for example $Co(NO_3)_2.6H_2O$, (14.84 g) was dissolved in a 1:1 (V/V) mixture of methanol and water (100 ml) to form Solution C,

(vi) Solution C was added to the (Mo clay) recovered in (iv) and mixed until homogeneous,

(vii) the Co impregnated [Mo clay] obtained in (vi) was recovered and dried on a rotary evaporator, and

(viii) the recovered Co impregnated Mo clay was calcined at $400^{\circ}C$ for 2 hours to give the CoMo clay.

## C. Impregnation of Clay with Metals (method (ii))

Phosphatomolybdic acid, $H_3PMo_{12}O_{40}$ (19.0g) was dissolved in distilled water (1.0 l) to form solution A. Cobalt nitrate, $Co(NO_3)_2$ $6H_2O$ (14.8g) was dissolved in distilled water (100 ml) to form solution B. Solutions A and B were added to a montmorillonite (75.g) suspension in distilled water (1.0 l) and stirred for 6 hours. The impregnated montmorillonite was recovered on a rotary evaporator then calcined at $400^{\circ}C$ for 2 hours. The product contained Mo (12%) and Co (3%) as oxides and is referred to as CoMo (HPA/P)-H-Montmorillonite. The silicatomolybdic acid, $H_4SiMo_{12}O_{40}$ analogue of the above catalyst was also prepared using the same procedure, this is referred to as CoMo (HPA/Si)-H-Montmorillonite.

In the above manner the following catalysts were produced:

. (I) a CoMo/alumina pillared montmorillonite,

(II) a NiMo/alumina pillared montmorillonite,

(III) a FeMo/alumina pillared montmorillonite,

(IV) a ZnMo/alumina pillared montmorillonite,

(V) a CoNiMo/alumina pillared montmorillonite,

(VI) a CoMo/zirconia pillared montmorillonite,

(VII) a CoMo H-montmorillonite,

(VIII) a CoMo (HPA/P)-H-montmorollonite,

(IX) a CoMo (HPA/Si)-H-montmorillonite.

## D. Pre-sulphiding Treatment

Two methods of pre-sulphiding were used. The sulphiding conditions were the same in each case but the feeds were either (1) LCO characterised as in Table 1 or (2) $CS_2$ in gas oil.

| Conditions | | |
|---|---|---|
| LHSV (FEED) | = | $2h^{-1}$ |
| $H_2$/FEED ratio | = | 150:1 (volume) |
| Pressure | = | 15 barg |
| Temperature | = | $175^{\circ}C$ for 3h |
| | | $300^{\circ}C$ for 3h |
| FEED (1) | = | LCO |
| FEED (2) | = | $CS_2$ in gas oil (1.4% wt. S) |

## E. LCO Up-grading

## Example 1

A mixture of hydrogen (gas) and LCO (characterised as in Table 1) in a ratio of 150:1 (equivalent to 2:1 molar) was pumped upwards through a reactor containing a fixed bed of the pre-sulphided (as in (B) 1) Catalyst (I) prepared as in (A) above in the form of grains of size 0.5 - 1.0 mm under the following conditions.

| LHSV (LCO) | = | $2h^{-1}$ |
|---|---|---|
| $H_2S$ ratio (volume) | = | 150 |
| Temperature | = | 360°C |
| Pressure | = | 80 barg |
| Catalyst volume | = | 10 ml |

Liquid products were collected at ambient temperature and pressure. Gaseous products were scrubbed to remove $H_2S$ and vented through a gas flow meter.

Example 2

The procedure of Example 1 was repeated under the same conditions except that Catalyst (II) was used.

Example 3

The procedure of Example 1 was repeated under the same conditions except that Catalyst (III) was used.

Example 4

The procedure of Example 1 was repeated under the same conditions except that Catalyst (IV) was used.

Example 5

The procedure of Example 1 was repeated under the same conditions except that Catalyst (V) was used.

Example 6

The procedure of Example 1 was repeated under the same conditions except that the catalyst used was presulphided as in (D) 2.

EXAMPLE 7

The procedure of Example 6 was repeated under the same conditions except that the LHSV was $1h^{-1}$.

Example 8

The procedure of Example 6 was repeated under the same conditions except that the temperature was 370°C.

Example 9

The procedure of Example 6 was repeated under the same conditions except that the catalyst was Catalyst (VI).

Example 10

The procedure of Example 1 was repeated under the same conditions except that the catalyst was catalyst VII.

Example 11

The procedure of Example 6 was repeated under the same conditions except that the catalyst was catalyst VIII.

Example 12

The procedure of Example 6 was repeated under the same conditions except that the catalyst was catalyst IX.

Comparison Test 1

The procedure of Example 1 was repeated under the same conditions except that the catalyst was an aluminium pillared montmorillonite, i.e. the catalyst of Example 1 without the CoMo components.

Comparison Test 2

The procedure of Example 1 was repeated under the same conditions except that the catalyst was a hydrogen ion exchanged layered clay - i.e. the catalyst of Example 11 without the CoMo components.

Comparison Test 3

The procedure of Example 1 was repeated under the same conditions except that the catalyst was 'CYANAMID HDS 20', a commercially available CoMo-gamma-alumina catalyst.

Comparison Test 4

The procedure of Example 1 was repeated under the same conditions except that the catalyst was 'SHELL 424', a commercially available NiMo-gamma-alumina catalyst.
The results of Exmples 1 to 12 and Comparison Tests 1 to 4 are given in Table 2.

7

Table 2

| Example | Catalyst | %S | Cetane Index | Density (gml⁻¹) |
|---|---|---|---|---|
|  | NONE | 2.21 | 27 | 0.9344 |
| 1 | (I) | 0.64 | 30 | 0.9117 |
| 2 | (II) | 0.64 | 30 | 0.9085 |
| 3 | (III) | 1.24 | 26 | 0.9172 |
| 4 | (IV) | 1.31 | - | 0.9186 |
| 5 | (V) | 0.65 | 31 | 0.9104 |
| 6 | (I) | 0.57 | 40 | 0.8845 |
| 7 | (I) | 0.47 | 40 | 0.8812 |
| 8 | (I) | 0.46 | 40 | 0.8807 |
| 9 | (VI) | 0.42 | 40 | 0.8794 |
| 10 | (VII) | 0.62 | 31 | 0.9094 |
| 11 | (VIII) | 0.42 | 39 | 0.8801 |
| 12 | (IX) | 0.49 | 39 | 0.8819 |
| CT 1 | A1 pillared montmorillonite | 2.14 | - | 0.9349 |
| CT 2 | H⁺ montmorillonite | 2.14 | 28 | 0.9352 |
| CT 3 | CoMo/gamma-alumina | 0.47 | 31 | 0.9050 |
| CT 4 | NiMo/gamma-alumina | 0.34 | 31 | 0.8997 |

**Claims**

1. A process for up-grading a light cycle oil which process comprises contacting the light cycle oil and hydrogen at elevated temperature and pressure with a catalyst comprising a layered or pillared clay, loaded with one or more hydrogenating metals.

2. A process as claimed in claim 1, in which the clay is a pillared clay.

3. A process as claimed in claim 2, in which the clay is an alumina or zirconia pillared clay.

4. A process as claimed in claim 1, in which the clay is a hydrogen-ion exchanged montmorillonite.

5. A process as claimed in any one of claims 1 to 4, in which the clay is loaded with one or more metals selected from the iron group and Group VIIB of the Periodic Table.

6. A process as claimed in claim 5, in which the clay is loaded with molybdenum,.

7. A process as claimed in claim 6, in which the clay is also loaded with cobalt.

8. A process as claimed in any one of claims 1 to 7, in which the catalyst contains from 5 to 20% wt of hydrogenating metal.

9. A process as claimed in any of claims 1 to 8, in which the catalyst has been pre-sulphided.

10. A process as claimed in any one of claims 1 to 9, in which the reaction is carried out at a temperature in the range from 200 to 430°C and a pressure in the range from 10 to 150 atmospheres.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 246 906 (BRITISH PETROLEUM CO.) * Whole document * | 1-10 | C 10 G 45/04 B 01 J 29/02 |
| D,A | US-A-4 176 090 (VAUGHAN et al.) * Abstract; claims 1-4,6-7,10,16-17; column 6, lines 23-37 * | 1-10 | |
| A | US-A-4 640 764 (HAMILTON, Jr.) * Abstract; claims 1-3,6,8,10-12,15,19 * | 1-10 | |
| A | FR-A-2 074 693 (UNIVERSAL OIL PRODUCTS CO.) * Claims 1-4 * | 1-10 | |

TECHNICAL FIELDS SEARCHED (Int. Cl.4)

C 10 G
B 01 J

The present search report has been drawn up for all claims

| Place of search | Date of completion of the search | Examiner |
|---|---|---|
| THE HAGUE | 05-09-1989 | MICHIELS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................................
& : member of the same patent family, corresponding document

EPO FORM 1503 03.82 (P0401)